# EUROPÄISCHE PATENTSCHRIFT

(11) **EP 3 560 711 B1**
(45) Veröffentlichungstag und Bekanntmachung des Hinweises auf die Patenterteilung: **05.08.2020**
(21) Anmeldenummer: 19163333.8
(22) Anmeldetag: 18.03.2019
(51) Int. Cl.: B32B 41/00, B42D 25/45

(54) **LAMINIERSYSTEM**
LAMINATION SYSTEM
SYSTÈME DE LAMINAGE

(30) Priorität: 06.04.2018 DE 102018108156
(43) Veröffentlichungstag der Anmeldung: 30.10.2019
(73) Patentinhaber: Bundesdruckerei GmbH, 10969 Berlin (DE)
(72) Erfinder: DIETL, Juergen, 82110 Germering (DE)
(74) Vertreter: Patentship Patentanwaltsgesellschaft mbH

(56) Entgegenhaltungen:
- DE-A1-102010 031 421
- DE-A1-102016 215 517
- DE-U1-202004 003 575

## Beschreibung

Die vorliegende Offenbarung betrifft ein Laminiersystem zur Laminierung von Dokumenten.

Zum Laminieren von Dokumenten, insbesondere von Identifikationskarten des Formats ID-1 oder ID-3 werden typischerweise Endlosbleche oder Pressbleche mit mehrfachen Prägungsnutzen verwendet, welche den jeweiligen Laminiersystemkomponenten zugeführt werden. In nachteiliger Weise kann es in einem derartigen Laminiersystem notwendig sein, für einen Formatwechsel der zu laminierenden Dokumente das Laminiersystem in Bezug auf ein geändertes Dokumentenformat umzurüsten. Insbesondere kann es notwendig sein, die Endlosbleche respektive die Pressbleche Auszutauschen, um mit dem Laminiersystem Dokumente mit einem anderen Dokumentenformat zu laminieren.

Die Offenlegungsschrift DE 10 2010 031 421 A1 offenbart eine Laminiervorrichtung und ein Verfahren zum Laminieren mehrlagiger Dokumente.

Die Offenlegungsschrift DE 10 2016 215 517 A1 offenbart eine Anlage und ein Verfahren zum Produzieren von Wert- und Sicherheitsdokumenten aus Vormaterialstücken.

Die Gebrauchsmusterschrift DE 20 2004 003 575 U1 offenbart eine Vorrichtung zum Herstellen von einem CD-Rohling.

Es ist die Aufgabe der vorliegenden Offenbarung, ein effizientes Laminiersystem bereitzustellen, welches insbesondere ein effizientes Dokumententransportsystem umfasst.

Diese Aufgabe wird durch die Merkmale des unabhängigen Anspruchs gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch ein Laminiersystem gelöst werden kann, welches eine verschwenkbare, insbesondere klappbare Dokumentenaufnahme aufweist, welche mit einer stabförmigen Führung mechanisch gekoppelt ist, um ein Dokument sequenziell zumindest zwischen einer Dokumentenaufnahmestellen und einer Laminierstelle zu bewegen. Insbesondere kann die Dokumentenaufnahme ausgebildet sein, abwechselnd Dokumente aufzunehmen, welche unterschiedliche Formate aufweisen, um der Laminierstelle unterschiedliche große Dokumente zuzuführen.

Gemäß einem ersten Aspekt betrifft die Offenbarung ein Laminiersystem zur Laminierung von Dokumenten. Das Laminiersystem umfasst eine Dokumentenaufnahme mit einem Unterteil und einem Oberteil, wobei das Unterteil und das Oberteil miteinander auflegbar ist und durch das verschwenkbare Oberteil gegen das Unterteil anpressbar ist. Ferner umfasst das Laminiersystem eine stabförmige Führung zum Befördern der Dokumentenaufnahme entlang einer Längsachse der stabförmigen Führung von einer Dokumentenaufnahmestelle zu einer Laminierstelle, wobei die Dokumentenaufnahme an der stabförmigen Führung um die Längsachse der stabförmigen Führung verschwenkbar gelagert ist. Die Dokumentenaufnahme ist ausgebildet, an der Dokumentenaufnahmestelle das Dokument aufzunehmen und das Oberteil gegen das Unterteil anzupressen, um das Dokument zu fixieren. Ferner ist die stabförmige Führung ausgebildet, die Dokumentenaufnahme nach der Aufnahme des zumindest einen Dokumentes von der Dokumentenaufnahmestelle zu der Laminierstelle zu befördern, wobei die Dokumentenaufnahme an der Laminierstelle erwärmbar ist, um das Dokument zu laminieren.

Dadurch wird der Vorteil erreicht, dass mit dem Laminiersystem stückweise alternierend Dokumente mit unterschiedlichen Formaten laminiert werden können. Die Dokumente können insbesondere Identifikationskarten in dem ID-1-Format oder Identifikationskarten in dem ID-3-Format sein. Die Dokumentenformate können beispielsweise durch die internationale Norm ISO/IEC 7810 bestimmt sein. Mit der beweglichen Dokumentenaufnahme kann eine modulare Anordnung des Laminiersystems realisiert werden, sodass die Dokumentenaufnahmestelle räumlich getrennt von der Laminierstelle angeordnet sein kann.

In einer Ausführungsform ist die Dokumentenaufnahme für die Aufnahme des zumindest einen Dokumentes in eine erste Lage, insbesondere in eine waagerechte Lage, verschwenkbar oder positionierbar, wobei die Dokumentenaufnahme für die Beförderung zur Laminierstelle in eine zweite Lage, insbesondere in eine bezüglich der ersten Lage senkrechte Lage, verschwenkbar ist.

Dadurch wird der Vorteil erreicht, dass die Dokumente in der Dokumentenaufnahme effizient von der Dokumentenaufnahmestelle zu der Laminierstelle transportiert werden können. Die waagerechte Lage des Dokumentes kann insbesondere durch eine Flächennormale des Dokumentes, welche parallel zur Schwerkraft ausgerichtet ist, definiert sein. Ein Dokument kann in der waagerechten Lage der Dokumentenaufnahme auf die Dokumentenaufnahme aufgelegt werden, wobei das Dokument durch die wirkende Schwerkraft auf der Dokumentenaufnahme gehalten werden kann. Für einen Transport des Dokumentes zu der Laminierstelle kann vor einem Verschwenken der Dokumentenaufnahme mit dem aufgelegten Dokument das Oberteil auf das Unterteil gepresst werden, um das Dokument in der Dokumentenaufnahme zu fixieren.

Die Laminierstelle kann einen Aufnahmeraum für die Dokumentenaufnahme aufweisen, welcher in einem beliebigen Winkel zu einer Ausrichtung der Dokumentenaufnahme an der Dokumentenaufnahmestelle angeordnet sein kann. Ein Bewegen des zusammengepressten Oberteils und Unterteils von der Dokumentenaufnahmestelle zu der Laminierstelle kann eine Bewegung des zusammengepressten Oberteils und Unterteils auf einer Kreisbahn mit einer Längsachse der stabförmigen Führung als Drehachse und/oder eine Translation des zusammengepressten Oberteils und Unterteils in Richtung der Längsachse der stabförmigen Führung umfassen.

In einer Ausführungsform ist die stabförmige Führung ausgebildet, die Dokumentenaufnahme in der zweiten Lage zu der Laminierstelle zu befördern.

Der waagerechten Lage kann ein Drehwinkel von 0° mit der stabförmigen Führung als Drehachse zugeordnet werden, und der senkrechten Lage kann entsprechend ein Drehwinkel von 90° zugeordnet werden. Die stabförmige Führung kann ausgebildet sein, mit einem Toleranzbereich von +/-10°, bevorzugt innerhalb von +/-5° die Dokumentenaufnahme in der waagerechten Lage oder in der senkrechten Lage zu positionieren, insbesondere abwechselnd in der waagerechten Lage und der senkrechten Lage zu positionieren.

Die stabförmige Führung kann ferner ausgebildet sein, eine Rotation der Dokumentenaufnahme, eine Translation entlang einer Längsachse der stabförmigen Führung und/oder eine Translation senkrecht zu der Längsachse der stabförmigen Führung unabhängig voneinander zu bewirken.

Durch den Transport der Dokumentenaufnahme in der zweiten Lage können beispielsweise Kollisionen mit mechanischen Hindernissen, welche zwischen der Dokumentenaufnahmestelle und der Laminierstelle angeordnet sind, unterbunden sein. Ferner kann mit der stabförmigen Führung eine präzise Ausrichtung der Dokumentenaufnahme zu der Dokumentenaufnahmestelle und/oder der Laminierstelle erreicht werden.

In einer Ausführungsform weist das Unterteil eine Aufnahmemulde für die Aufnahme eines Dokumentes oder nebeneinander angeordnete Aufnahmemulden für die Aufnahme von zumindest zwei Dokumenten auf. Dadurch wird der Vorteil erreicht, dass das Dokument in einer vorbestimmten Ausrichtung und/oder einer vorbestimmten Position auf dem Unterteil aufliegt und dementsprechend in der vorbestimmten Ausrichtung und/oder Position der Laminierstelle zugeführt werden kann. Ferner kann mit der Aufnahmemulde ein Verschieben des Dokumentes auf einer Oberfläche des Unterteils unterbunden sein. Die Aufnahmemulde kann insbesondere durch eine rechteckförmige Vertiefung und/oder einen umlaufenden Steg gebildet sein.

Die Aufnahmemulden zur Aufnahme von zwei Dokumenten können unterschiedliche Abmessungen aufweisen, um beispielsweise eine Identifikationskarte in dem ID-1-Format und/oder eine Identifikationskarte in dem ID-3-Format in einer entsprechend geformten Aufnahmemulde aufzunehmen. Die Aufnahmemulden können aneinander grenzen und/oder durch einen Steg voneinander getrennt respektive beabstandet sein. Eine Identifikationskarte in dem ID-1-Format kann eine Länge von 85,60 mm und eine Breite von 53,98 mm aufweisen und eine Identifikationskarte in dem ID-3-Format kann eine Länge von 125 mm und eine Breite von 88 mm aufweisen.

In einer Ausführungsform umfasst das Laminiersystem eine weitere Dokumentenaufnahme zur Aufnahme eines weiteren Dokumentes, wobei die weitere Dokumentenaufnahme ein weiteres Unterteil und ein weiteres Oberteil aufweist und das weitere Unterteil und das weitere Oberteil miteinander verschwenkbar verbunden sind. Das weitere Dokument ist auf das weitere Unterteil auflegbar und durch das verschwenkbare weitere Oberteil gegen das weitere Unterteil anpressbar. Ferner sind die Dokumentenaufnahme und die weitere Dokumentenaufnahme an der stabförmigen Führung ortsfest zueinander und gemeinsam verschwenkbar angeordnet und bilden eine Doppelaufnahme für die Aufnahme des Dokumentes und des weiteren Dokumentes an der Dokumentenaufnahmestelle. Weiterhin ist die stabförmige Führung ausgebildet, die Dokumentenaufnahme und die weitere Dokumentenaufnahme von der Dokumentenaufnahmestelle zu der Laminierstelle gemeinsam verschwenkt in der zweiten Lage zu befördern.

Dadurch wird der Vorteil erreicht, dass zwei Dokumente gleichzeitig durch jeweils eine Dokumentenaufnahme gehalten und mittels des jeweiligen Oberteils und Unterteils gepresst werden können. Mit dem gemeinsamen Verschwenken der zwei Dokumentenaufnahmen, können die Dokumentenaufnahmen gleichzeitig horizontal jeweils an der Dokumentenaufnahmestelle und/oder der Laminierstelle positioniert werden. An der Laminierstelle können beide Dokumentenaufnahmen beispielsweise gleichzeitig geheizt werden, um in die Dokumente gleichzeitig zu laminieren.

In einer Ausführungsform ist die Dokumentenaufnahme ausgebildet, das Dokument in einem ersten Dokumentenformat aufzunehmen, wobei die weitere Dokumentenaufnahme ausgebildet ist, das weitere Dokument in einem weiteren Dokumentenformat aufzunehmen, wobei das Dokumentenformat und das weitere Dokumentenformat unterschiedlich sind.

Dadurch wird der Vorteil erreicht, dass die jeweilige Dokumentenaufnahme an das Format des aufzunehmenden Dokuments angepasst sein kann, sodass die Dokumentenaufnahme und die weitere Dokumentenaufnahme unterschiedlich geformt sein können. Insbesondere können die Dokumentenaufnahmen zueinander abweichende Auflageflächen, Abmessungen und/oder Aufnahmemulden aufweisen. Ferner können die jeweiligen Dokumentenaufnahmen nebeneinander angeordnet sein, sodass die Dokumente an der Dokumentenaufnahmestelle durch unterschiedliche Dokumentenzuführungseinrichtungen auf die jeweilige Dokumentenaufnahme auflegbar sein können. Ferner können die Dokumentenaufnahmestellen an der Laminierstelle mit unterschiedlichen Wärmemengen beaufschlagt werden und/oder auf unterschiedliche Temperaturen geheizt werden.

In einer Ausführungsform sind die Dokumentenaufnahme und die weitere Dokumentenaufnahme unabhängig voneinander um die Längsachse der stabförmigen Führung rotierbar gelagert. Dadurch wird der Vorteil erreicht, dass die Dokumentenaufnahme unabhängig von der weiteren Dokumentenaufnahme zur Aufnahme eines Dokuments an der Dokumentenaufnahmestelle in die erste Lage gebracht werden kann um ein Dokument aufzunehmen und beispielsweise nachfolgend die weitere Dokumentenaufnahme in die erste Lage gebracht wird, um ein weiteres Dokument aufzunehmen.

Falls die Dokumentenaufnahmen von der gleichen Dokumentenzuführungseinrichtung mit einem Dokument zu bestücken sind, können die Dokumentenaufnahmen nacheinander, insbesondere durch eine Translation entlang der Längsachse der stabförmigen Führung und/oder durch eine Rotation zu der Dokumentenzuführungseinrichtung ausgerichtet werden. Ferner können die Dokumentenaufnahmen sequenziell durch die Laminierstelle aufgeheizt werden, sodass beispielsweise nur ein Heizelement zum Heizen einer Dokumentenaufnahme vorgesehen sein kann.

In einer Ausführungsform ist die jeweilige Dokumentenaufnahme an einer Hülse befestigt, insbesondere mit der Hülse stoffschlüssig verbunden, wobei die Hülse um die Längsachse durchsetzbar ist und durch die stabförmige Führung durchsetzt ist.

Dadurch wird der Vorteil erreicht, dass die Dokumentenaufnahme an der stabförmigen Führung entlang der Längsachse der stabförmigen Führung axial verschiebbar angeordnet sein kann. Die Hülse kann insbesondere formschlüssig und/oder kraftschlüssig mit der stabförmigen Führung verbunden sein. Beispielsweise kann eine Rotation der stabförmigen Führung in eine Translation der Dokumentenaufnahme in Richtung der Längsachse der stabförmigen Führung umgesetzt werden. Die Dokumentenaufnahme kann in einer ausgewählten radialen Richtung an die Hülse angeformt sein.

In einer Ausführungsform weist die stabförmige Führung ein Gewinde, insbesondere ein Außengewinde, auf und ist um die Längsachse rotierbar gelagert, wobei die jeweilige Dokumentenaufnahme mit der stabförmigen Führung in Gewindeeingriff, insbesondere mittels einer Hülse mit einem Gewinde, verbunden ist. Dadurch wird der Vorteil erreicht, dass durch eine Rotation der Dokumentenaufnahme und/oder der stabförmigen Führung eine Position der Dokumentenaufnahme auf der stabförmigen Führung geändert werden kann. Bei einer feststehenden stabförmigen Führung kann die Dokumentenaufnahme durch Rotation der stabförmigen Führung verschoben werden.

In einer Ausführungsform umfasst das Laminiersystem eine Heizeinrichtung, welche an der Laminierstelle angeordnet und ausgebildet ist, die jeweilige Dokumentenaufnahme mit Wärme zu beaufschlagen, um das jeweilige Dokument zu laminieren. Die Heizeinrichtung kann eine Kontaktheizung sein, auf welche die Dokumentenaufnahme aufgelegt und/oder eingeschoben werden kann, wobei ein Aufheizen der Dokumentenaufnahme respektive des zwischen dem Oberteil und dem Unterteil angeordneten Dokuments mittels Wärmeleitung erreicht wird. Ferner kann die Heizeinrichtung ein Heizlüfter oder eine Strahlungsheizung sein, welche die Dokumentenaufnahme jeweils kontaktlos aufheizen können.

In einer Ausführungsform umfasst das Laminiersystem eine Anpresseinrichtung, welche an einer Anpressstelle nach oder an der Laminierstelle angeordnet ist, wobei die stabförmige Führung ausgebildet ist, die Dokumentenaufnahme verschwenkt, insbesondere um 90° verschwenkt, zu der Anpressstelle zu befördern, wobei die Anpresseinrichtung ausgebildet ist, das jeweilige Unterteil gegen das jeweilige Oberteil anzupressen, und/oder wobei die stabförmige Führung ausgebildet ist, die Dokumentenaufnahme von der Laminierstelle zu der Anpressstelle verschwenkt zu befördern.

In einer Ausführungsform umfasst das Laminiersystem eine Kühleinrichtung, welche an einer Kühlstelle nach der Laminierstelle angeordnet ist, wobei die Kühleinrichtung ausgebildet ist, die Dokumentenaufnahme abzukühlen, um das laminierte Dokument zu verfestigen und eine Dokumentenentnahmestelle, welche der Kühlstelle nachgeschaltet ist, wobei an der Dokumentenentnahmestelle das abgekühlte, laminierte Dokument entnehmbar ist.

Dadurch wird der Vorteil erreicht, dass mittels der Kühleinrichtung das laminierte Dokument nach dem Heizen und/oder dem Pressen, insbesondere aktiv abgekühlt werden kann, um schneller als ohne Kühlung das Dokument nach dem Laminieren an der Dokumentenentnahmestelle entnehmen zu können. Das Dokument kann insbesondere eine mittels der Heizeinrichtung verflüssigbare und/oder mittels der Anpresseinrichtung verformbare Materialschicht aufweisen, welche in der Kühleinrichtung abgekühlt wird, um die Materialschicht wieder zu verfestigen. Mittels der Kühleinrichtung und der Dokumentenentnahmestelle, welche insbesondere eine automatisierte Entnahme des Dokuments aus der Dokumentenaufnahme ermöglicht, kann eine Anzahl von laminierten Dokumenten, welche mit dem Laminiersystem laminierbar sind, vorteilhaft erhöht sein.

In einer Ausführungsform ist die stabförmige Führung ausgebildet, die Dokumentenaufnahme sequenziell von der Dokumentenaufnahmestelle, zu der Laminierstelle, zu der Kühlstelle, zu der Dokumentenentnahmestelle und zurück zu der Dokumentenaufnahmestelle zu bewegen.

Dadurch wird der Vorteil erreicht, dass ein in der Dokumentenaufnahme befindliches Dokument für den gesamten Laminierprozess in der Dokumentenaufnahme verbleibt. Falls das Dokument eine Mehrzahl von Schichten aufweist, welche zueinander ausgerichtet zu einem Stapel geformt sind, kann ein Verschieben der Schichten gegeneinander unterbunden sein.

In einer Ausführungsform umfasst das Laminiersystem drei weitere Dokumentenaufnahmen und drei weitere stabförmige Führungen, welche jeweils parallel zu der stabförmigen Führung angeordnet sind, wobei jeweils nur eine Dokumentenaufnahme der vier Dokumentenaufnahmen an der Dokumentenaufnahmestelle, der Laminierstelle, der Kühlstelle oder der Dokumentenentnahmestelle mittels der jeweiligen stabförmigen Führung angeordnet ist, um kontinuierlich der jeweiligen nächsten Stelle ein Dokument aus der vorgeschalteten Stelle bereitzustellen.

Dadurch wird der Vorteil erreicht, dass das Laminiersystem eine gleiche Anzahl von Dokumentenaufnahmen und Laminierprozessstellen, in Form der Dokumentenaufnahmestelle, der Laminierstelle, der Kühlstelle und der Dokumentenentnahmestelle aufweisen kann. Entsprechend kann zyklisch jeweils eine Dokumentenaufnahme an einer Laminierprozessstelle angeordnet sein, um eine Mehrzahl von Dokumenten sequenziell effizient zu laminieren. Eine Leerlaufzeit der jeweiligen Laminierprozessstelle kann dadurch vorteilhaft reduziert sein.

Ferner kann das jeweilige Bewegen einer Dokumentenaufnahme mittels der stabförmigen Führung mit dem Bewegen der weiteren drei Dokumentenaufnahmen mittels der weiteren stabförmigen Führungen synchronisiert sein, um einen gleichzeitigen Wechsel zwischen den Laminierprozessstellen zu realisieren. Ferner kann das Bewegen der Dokumentenaufnahmen je Laminierprozessstelle variieren. Beispielsweise können die Dokumentenaufnahmen an der Dokumentenaufnahmestelle sequenziell nacheinander jeweils mit einem Dokument bestückt werden und nachfolgend können alle Dokumentenaufnahmen gleichzeitig zu der Laminierstelle bewegt werden, um gleichzeitig an der Laminierstelle aufgeheizt zu werden.

In einer Ausführungsform sind die vier stabförmigen Führungen paarweise gegenüberliegend angeordnet, wobei die Dokumentenaufnahmestelle, die Laminierstelle, die Kühleinrichtung und die Dokumentenentnahmestelle parallel zu den stabförmigen Führungen zwischen den zwei Paaren von stabförmigen Führungen angeordnet sind. Dadurch wird der Vorteil erreicht, dass bei einem Bewegen der jeweiligen Dokumentenaufnahme zwischen der ersten Lage und der zweiten Lage eine Kollision mit einer weiteren Dokumentenaufnahme unterbunden sein kann.

Weitere Ausführungsbeispiele werden Bezug nehmend auf die beiliegenden Figuren erläutert. Es zeigen:
- Fig. 1: ein Laminiersystem in einer Ausführungsform;
- Fig. 2: ein Laminiersystem in einer Ausführungsform;
- Fig. 3: ein Laminiersystem in einer Ausführungsform; und
- Fig. 4: ein Laminiersystem in einer Ausführungsform.

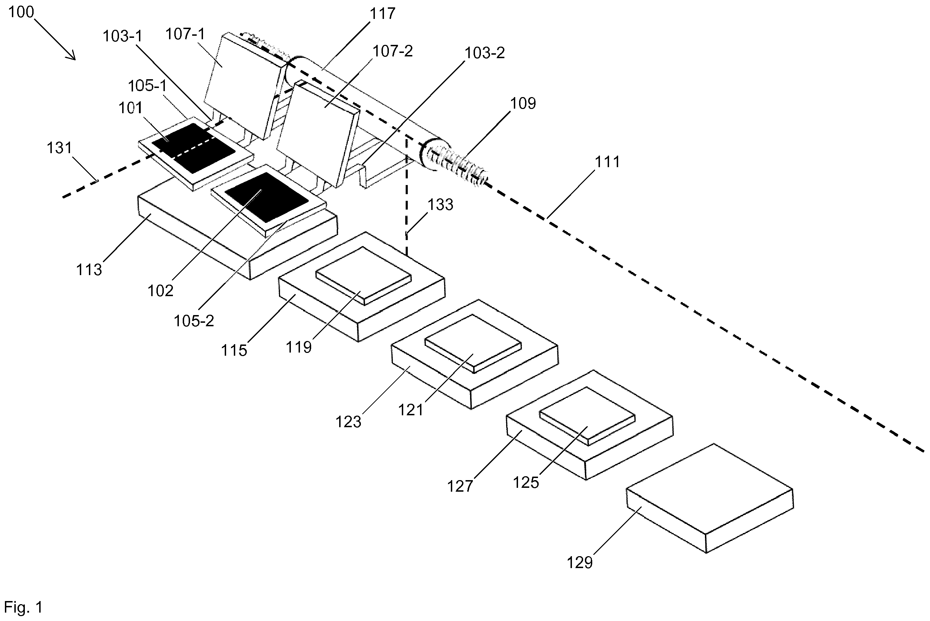

Fig. 1 zeigt eine schematische Perspektivdarstellung eines Laminiersystems 100 zur Laminierung von Dokumenten 101. Das Laminiersystem 100 umfasst eine Dokumentenaufnahme 103-1 mit einem Unterteil 105-1 und einem Oberteil 107-1, wobei das Unterteil 105-1 und das Oberteil 107-1 miteinander verschwenkbar verbunden sind. Zumindest ein Dokument 101 ist auf das Unterteil 105-1 auflegbar und durch das verschwenkbare Oberteil 107-1 gegen das Unterteil 105-1 anpressbar.

Ferner umfasst das Laminiersystem 100 eine stabförmige Führung 109 zum Befördern der Dokumentenaufnahme 103-1 entlang einer Längsachse 111 der stabförmigen Führung 109 von einer Dokumentenaufnahmestelle 113 zu einer Laminierstelle 115, wobei die Dokumentenaufnahme 103-1 an der stabförmigen Führung 109 um die Längsachse 111 der stabförmigen Führung 109 verschwenkbar gelagert ist. Die Dokumentenaufnahme 103-1 ist an der Dokumentenaufnahmestelle 113 ausgebildet, das Dokument 101 aufzunehmen und das Oberteil 107-1 gegen das Unterteil 105-1 anzupressen, um das Dokument 101 zu fixieren. Ferner ist die stabförmige Führung 109 ausgebildet, die Dokumentenaufnahme 103-1 nach der Aufnahme des zumindest einen Dokumentes 101 von der Dokumentenaufnahmestelle 113 zu der Laminierstelle 115 zu befördern. Die Dokumentenaufnahme 103-1 ist an der Laminierstelle 115 erwärmbar, um das Dokument 101 zu laminieren.

Die Dokumentenaufnahme 103-1 ist für die Aufnahme des zumindest einen Dokumentes 101 in eine erste Lage 131, insbesondere in eine waagerechte Lage, verschwenkbar oder positionierbar. Ferner ist die Dokumentenaufnahme 103-1 für die Beförderung zur Laminierstelle 115 in eine zweite Lage 133, insbesondere in eine bezüglich der ersten Lage 131 senkrechte Lage, verschwenkbar. Die stabförmige Führung 109 ist ausgebildet, die Dokumentenaufnahme 103-1 in der zweiten Lage 133 zu der Laminierstelle 115 zu befördern.

Das Laminiersystem 100 umfasst ferner eine weitere Dokumentenaufnahme 103-2 zur Aufnahme eines weiteren Dokumentes 102, wobei die weitere Dokumentenaufnahme 103-2 ein weiteres Unterteil 105-2 und ein weiteres Oberteil 107-2 aufweist. Das weitere Unterteil 105-2 und das weitere Oberteil 107-2 sind miteinander verschwenkbar verbunden. Ferner ist das weitere Dokument 102 auf das weitere Unterteil 105-2 auflegbar und durch das verschwenkbare weitere Oberteil 107-2 gegen das weitere Unterteil 105-2 anpressbar.

Weiterhin sind die Dokumentenaufnahme 103-1 und die weitere Dokumentenaufnahme 103-2 an der stabförmigen Führung 109 ortsfest zueinander und gemeinsam verschwenkbar angeordnet und bilden eine Doppelaufnahme für die Aufnahme des Dokumentes 101 und des weiteren Dokumentes 102 an der Dokumentenaufnahmestelle 113.

Die stabförmige Führung 109 ist ausgebildet, die Dokumentenaufnahme 103-1 und die weitere Dokumentenaufnahme 103-2 von der Dokumentenaufnahmestelle 113 zu der Laminierstelle 115 gemeinsam verschwenkt in der zweiten Lage 133 zu befördern.

Ferner ist die Dokumentenaufnahme 103-1 ausgebildet, das Dokument 101 in einem ersten Dokumentenformat aufzunehmen, wobei die weitere Dokumentenaufnahme 103-2 ist ausgebildet, das weitere Dokument 102 in einem weiteren Dokumentenformat aufzunehmen, wobei das Dokumentenformat und das weitere Dokumentenformat unterschiedlich sind.

Die jeweilige Dokumentenaufnahme 103-1, 103-2 ist an einer Hülse 117 befestigt, insbesondere mit der Hülse 117 stoffschlüssig verbunden ist, wobei die Hülse 117 durch die stabförmige Führung 109 durchsetzt und um die Längsachse 111 durchsetzbar ist. Die stabförmige Führung 109 weist ein Gewinde, insbesondere ein Außengewinde, auf und ist um die Längsachse 111 rotierbar gelagert. Ferner ist die jeweilige Dokumentenaufnahme 103-1, 103-2 mit der stabförmigen Führung 109 in Gewindeeingriff, insbesondere mittels der Hülse 117 mit einem Gewinde, verbunden.

Das Laminiersystem 100 umfasst ferner eine Heizeinrichtung 119, welche an der Laminierstelle 115 angeordnet und ausgebildet ist, die jeweilige Dokumentenaufnahme 103-1, 103-2 mit Wärme zu beaufschlagen, um das jeweilige Dokument 101, 102 zu laminieren.

Weiterhin umfasst das Laminiersystem 100 eine Anpresseinrichtung 121, welche an einer Anpressstelle 123 nach oder an der Laminierstelle 115 angeordnet ist, wobei die stabförmige Führung 109 ausgebildet ist, die Dokumentenaufnahme 103-1 verschwenkt, insbesondere um 90° verschwenkt, zu der Anpressstelle 123 zu befördern. Die Anpresseinrichtung 121 ist ausgebildet, das jeweilige Unterteil 105-1, 105-2 gegen das jeweilige Oberteil 107-1, 107-2 anzupressen und die stabförmige Führung 109 ist ausgebildet, die Dokumentenaufnahme 103-1 von der Laminierstelle 115 zu der Anpressstelle 123 verschwenkt zu befördern. Die Anpresseinrichtung 121 ist insbesondere ausgebildet, das jeweilige Unterteil 105-1, 105-2 und/oder das jeweilige Oberteil 107-1, 107-2 mit einer Druckkraft zu beaufschlagen, um das Dokument 101 und/oder das weitere Dokument 102 zusammen zu pressen.

Das Laminiersystem 100 umfasst ferner eine Kühleinrichtung 125, welche an einer Kühlstelle 127 nach der Laminierstelle 115 angeordnet ist, wobei die Kühleinrichtung 125 ausgebildet ist, die Dokumentenaufnahme 103-1 abzukühlen, um das laminierte Dokument 101 zu verfestigen, und mit einer Dokumentenentnahmestelle 129, welche der Kühleinrichtung 125 nachgeschaltet ist, wobei an der Dokumentenentnahmestelle 129 das abgekühlte, laminierte Dokument 101 entnehmbar ist.

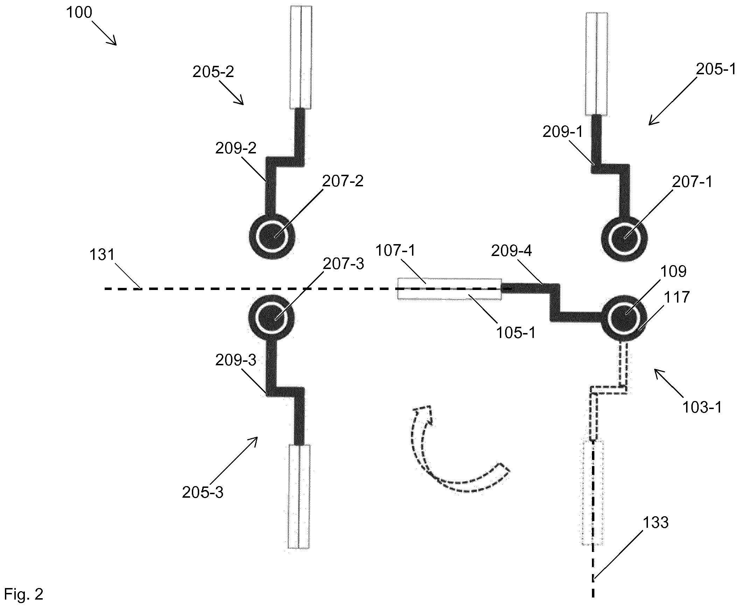

Fig. 2 zeigt eine schematische Querschnittsansicht eines Laminiersystems 100. Das Laminiersystem 100 umfasst vier Dokumentenaufnahmen 103-1, 205-1, 205-2, 205-3 und vier stabförmige Führungen 109, 207-1, 207-2, 207-3 gemäß der in Fig. 1 gezeigten Ausführungsform. Die drei zusätzlichen stabförmigen Führungen 207-1, 207-2, 207-3 sind jeweils parallel zu der stabförmigen Führung 109 gemäß der in Fig. 1 gezeigten Ausführungsform angeordnet. Ferner sind die vier stabförmigen Führungen 109, 207-1, 207-2, 207-3 paarweise gegenüberliegend angeordnet.

Ein erstes Paar von zwei stabförmige Führungen 109, 207-1 ist an einer ersten Seite des Laminiersystems 100 angeordnet und ein weiteres Paar von zwei stabförmigen Führungen 207-2, 207-3 ist an einer der ersten Seite gegenüberliegenden Seite des Laminiersystems 100 angeordnet. In einer Ausführungsform kann jeweils eine der stabförmigen Führung 109, 207-1, 207-2, 207-3 an jeweils einer Seite von vier rechteckig zueinander ausgerichteten Seiten des Laminiersystems 100 angeordnet sein.

Die Dokumentenaufnahmen 103-1, 205-1, 205-2, 205-3 umfassen jeweils ein Trägerelement 209-1, 209-2, 209-3, 209-4, welche ausgebildet sind, das jeweilige Oberteil und das jeweilige Unterteil in Bezug zu der jeweiligen stabförmigen Führung 109, 207-1, 207-2, 207-3 winklig versetzt anzuordnen. Mit dem winkligen Versatz wird der Vorteil erreicht, dass trotz der versetzt zueinander angeordneten stabförmigen Führungen 109, 207-1, 207-2, 207-3 die jeweilige Dokumentenaufnahme 103-1, 205-1, 205-2, 205-3 mittels Rotation um eine Längsachse der jeweiligen stabförmigen Führung 109, 207-1, 207-2, 207-3 in eine gemeinsame Ebene, welche die erste Lage 131 enthält bewegt werden können.

Insbesondere kann in der gemeinsamen Ebene das durch das jeweilige Oberteil und das jeweilige Unterteil gehaltene Dokument angeordnet sein. Beispielsweise ist das Dokument parallel zu der gemeinsamen Ebene angeordnet. Der jeweilige Versatz des jeweiligen Trägerelements 209-1, 209-2, 209-3, 209-4 kann ferner mittels einer gebogenen und/oder geschwungenen Form des jeweiligen Trägerelements 209-1, 209-2, 209-3, 209-4 realisiert sein. Ferner kann das jeweilige Trägerelement 209-1, 209-2, 209-3, 209-4 eine einzelne gewinkelte Stabverbindung zu dem jeweiligen Oberteil 107-1 und dem jeweiligen Unterteil 105-1 aufweisen oder mittels einer weiteren gewinkelten Stabverbindung verstärkt sein.

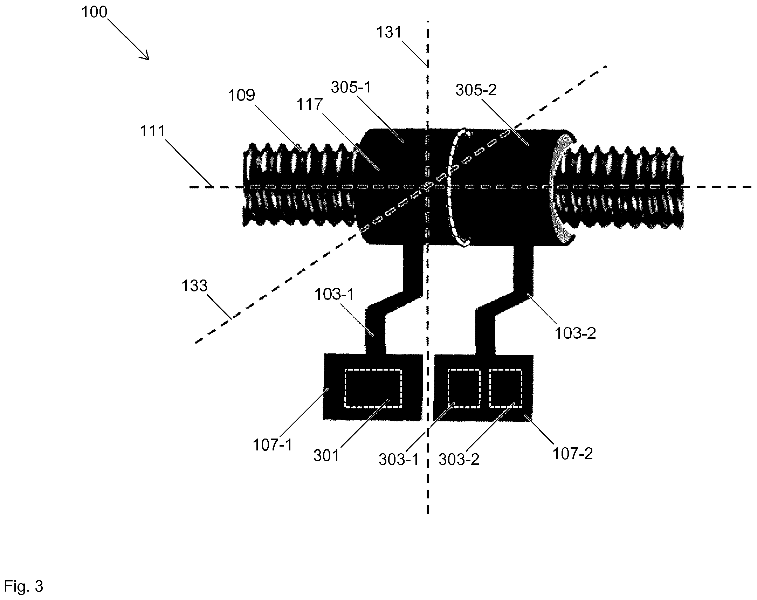

Fig. 3 zeigt eine schematische Darstellung eines Laminiersystems 100 gemäß einer Ausführungsform. Das Laminiersystem 100 umfasst eine Dokumentenaufnahme 103-1 mit einem Unterteil und einem Oberteil 107-1, wobei das Unterteil und das Oberteil 107-1 miteinander verschwenkbar verbunden sind.

Ferner umfasst das Laminiersystem 100 eine stabförmige Führung 109 zum Befördern der Dokumentenaufnahme 103-1 entlang einer Längsachse 111 der stabförmigen Führung 109, wobei die Dokumentenaufnahme 103-1 an der stabförmigen Führung 109 um die Längsachse 111 der stabförmigen Führung 109 verschwenkbar gelagert ist. Die Dokumentenaufnahme 103-1 ist für die Aufnahme eines Dokumentes in eine erste Lage 131, insbesondere in eine waagerechte Lage, verschwenkbar oder positionierbar. Ferner ist die Dokumentenaufnahme 103-1 in eine zweite Lage 133, insbesondere in eine bezüglich der ersten Lage 131 senkrechte Lage, verschwenkbar.

Das Laminiersystem 100 umfasst ferner eine weitere Dokumentenaufnahme 103-2 zur Aufnahme eines weiteren Dokumentes, wobei die weitere Dokumentenaufnahme 103-2 ein weiteres Unterteil und ein weiteres Oberteil 107-2 aufweist. Weiterhin sind die Dokumentenaufnahme 103-1 und die weitere Dokumentenaufnahme 103-2 an der stabförmigen Führung 109 ortsfest zueinander angeordnet und bilden eine Doppelaufnahme für die Aufnahme des Dokumentes und des weiteren Dokumentes.

Das Unterteil weist eine Aufnahmemulde 301 für die Aufnahme eines Dokumentes 101 und das weitere Unterteil weist nebeneinander angeordnete Aufnahmemulden 303-1, 303-2 für die Aufnahme von zumindest zwei Dokumenten auf. Die Aufnahmemulden 301, 303-1, 303-2 sind in Durchsicht durch das jeweilige Oberteil 107-1, 107-2 gezeigt. Beispielsweise können in die Aufnahmemulden 303-1, 303-2 jeweils ein Dokument in dem ID-1-Format eingelegt werden und in die Aufnahmemulde 301 kann ein Dokument in dem ID-3-Format eingelegt werden.

Die Dokumentenaufnahme 103-1 und die weitere Dokumentenaufnahme 103-2 sind unabhängig voneinander um die Längsachse 111 der stabförmigen Führung 109 rotierbar gelagert. Die jeweilige Dokumentenaufnahme 103-1, 103-2 ist an einer Hülse 117 befestigt, insbesondere mit der Hülse 117 stoffschlüssig verbunden, wobei die Hülse 117 durch die stabförmige Führung 109 durchsetzt ist.

Die stabförmige Führung 109 weist ein Gewinde, insbesondere ein Außengewinde, auf und ist um die Längsachse 111 rotierbar gelagert, wobei die jeweilige Dokumentenaufnahme 103-1, 103-2 mit der stabförmigen Führung 109 in Gewindeeingriff, insbesondere mittels der Hülse 117 mit einem Gewinde, verbunden ist.

Die Hülse 117 kann ferner ein Lager aufweisen, welches ausgebildet ist die jeweilige Dokumentenaufnahme 103-1, 103-2 unabhängig von einer Bewegung der Hülse 117 auf dem Gewinde der stabförmigen Führung 109 um die Längsachse 111 zu rotieren. Demnach kann eine Rotation der Dokumentenaufnahmen 103-1, 103-2 um die Längsachse 111 von einer Translation entlang der Längsachse 111 entkoppelt sein. Ferner kann die Hülse 117 zwei gegeneinander rotierbare Elemente 305-1, 305-2 aufweisen, wobei an jeweils einem rotierbaren Element 305-1, 305-2 eine der Dokumentenaufnahmen 103-1, 103-2 befestigt ist, um die Dokumentenaufnahmen 103-1, 103-2 unabhängig voneinander um die Längsachse 111 rotieren zu können.

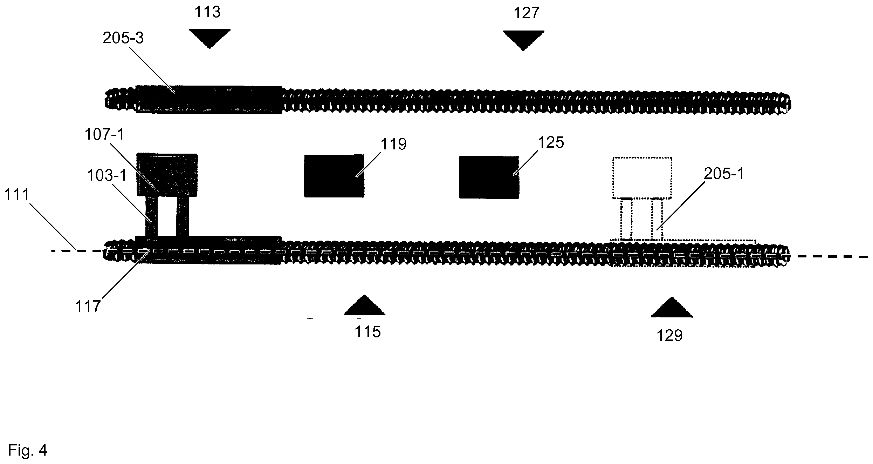

Fig. 4 zeigt eine schematische Darstellung eines Laminiersystems 100 gemäß einer Ausführungsform. Jeweils nur eine Dokumentenaufnahme der vier Dokumentenaufnahmen 103-1, 205-1, 205-2, 205-3 ist an der Dokumentenaufnahmestelle 113, der Laminierstelle 115, der Kühlstelle 127 oder der Dokumentenentnahmestelle 129 mittels der jeweiligen stabförmigen Führung 109, 207-1, 207-2, 207-3 angeordnet, um kontinuierlich der jeweiligen nächsten Stelle ein Dokument aus der vorgeschalteten Stelle bereitzustellen.

Die vier stabförmigen Führungen 109, 207-1, 207-2, 207-3 sind paarweise gegenüberliegend angeordnet und die Dokumentenaufnahmestelle 113, die Laminierstelle 115, die Kühlstelle 127 und die Dokumentenentnahmestelle 129 sind in einer Reihe parallel zu den stabförmigen Führungen 109, 207-1, 207-2, 207-3 zwischen den zwei Paaren von stabförmigen Führungen 109, 207-1, 207-2, 207-3 angeordnet.

Die stabförmige Führung 109 ist ausgebildet, die Dokumentenaufnahme 103-1 sequenziell von der Dokumentenaufnahmestelle 113, zu der Laminierstelle 115 mit der Heizvorrichtung 119, zu der Kühlstelle 127 mit der Kühleinrichtung 125, zu der Dokumentenentnahmestelle 129 und zurück zu der Dokumentenaufnahmestelle 113 zu bewegen. Die Laminierstelle 115 kann dabei die Anpressstelle mit der Anpressvorrichtung umfassen.

### Bezugszeichenliste

- 100: Laminiersystem
- 101: Dokument
- 103-1: Dokumentenaufnahme
- 103-2: Dokumentenaufnahme
- 105-1: Unterteil
- 105-2: Unterteil
- 107-1: Oberteil
- 107-2: Oberteil
- 109: Stabförmige Führung
- 111: Längsachse
- 113: Dokumentenaufnahmestelle
- 115: Laminierstelle
- 117: Hülse
- 119: Heizeinrichtung
- 121: Anpresseinrichtung
- 123: Anpressstelle
- 125: Kühleinrichtung
- 127: Kühlstelle
- 129: Dokumentenentnahmestelle
- 131: Erste Lage
- 133: Zweite Lage

- 205-1: Dokumentenaufnahme
- 205-2: Dokumentenaufnahme
- 205-3: Dokumentenaufnahme
- 207-1: Stabförmige Führung
- 207-2: Stabförmige Führung
- 207-3: Stabförmige Führung
- 209-1: Trägerelement
- 209-2: Trägerelement
- 209-3: Trägerelement
- 209-4: Trägerelement

- 301: Aufnahmemulde
- 303-1: Aufnahmemulde
- 303-2: Aufnahmemulde
- 305-1: Rotierbares Element
- 305-2: Rotierbares Element

## Patentansprüche

1. Laminiersystem (100) zur Laminierung von Dokumenten (101), mit:
einer Dokumentenaufnahme (103-1) mit einem Unterteil (105-1) und einem Oberteil (107-1), wobei das Unterteil (105-1) und das Oberteil (107-1) miteinander verschwenkbar verbunden sind, und wobei zumindest ein Dokument (101) auf das Unterteil (105-1) auflegbar ist und durch das verschwenkbare Oberteil (107-1) gegen das Unterteil (105-1) anpressbar ist;
einer stabförmigen Führung (109) zum Befördern der Dokumentenaufnahme (103-1) entlang einer Längsachse (111) der stabförmigen Führung (109) von einer Dokumentenaufnahmestelle (113) zu einer Laminierstelle (115), wobei die Dokumentenaufnahme (103-1) an der stabförmigen Führung (109) um die Längsachse (111) der stabförmigen Führung (109) verschwenkbar gelagert ist; wobei
die Dokumentenaufnahme (103-1) an der Dokumentenaufnahmestelle (113) ausgebildet ist, das Dokument (101) aufzunehmen und das Oberteil (107-1) gegen das Unterteil (105-1) anzupressen, um das Dokument (101) zu fixieren; wobei
die stabförmige Führung (109) ausgebildet ist, die Dokumentenaufnahme (103-1) nach der Aufnahme des zumindest einen Dokumentes (101) von der Dokumentenaufnahmestelle (113) zu der Laminierstelle (115) zu befördern; wobei
die Dokumentenaufnahme (103-1) an der Laminierstelle (115) erwärmbar ist, um das Dokument (101) zu laminieren.

2. Laminiersystem (100) nach Anspruch 1, wobei die Dokumentenaufnahme (103-1) für die Aufnahme des zumindest einen Dokumentes (101) in eine erste Lage (131), insbesondere in eine waagerechte Lage, verschwenkbar oder positionierbar ist, und wobei die Dokumentenaufnahme (103-1) für die Beförderung zur Laminierstelle (115) in eine zweite Lage (133), insbesondere in eine bezüglich der ersten Lage (131) senkrechte Lage, verschwenkbar ist.

3. Laminiersystem (100) nach Anspruch 2, wobei die stabförmige Führung (109) ausgebildet ist, die Dokumentenaufnahme (103-1) in der zweiten Lage (133) zu der Laminierstelle (115) zu befördern.

4. Laminiersystem (100) nach einem der vorstehenden Ansprüche, wobei das Unterteil (105-1) eine Aufnahmemulde (301) für die Aufnahme eines Dokumentes (101) oder nebeneinander angeordnete Aufnahmemulden (303-1, 303-2) für die Aufnahme von zumindest zwei Dokumenten (101) aufweist.

5. Laminiersystem (100) nach einem der vorstehenden Ansprüche, mit einer weiteren Dokumentenaufnahme (103-2) zur Aufnahme eines weiteren Dokumentes (102), wobei die weitere Dokumentenaufnahme (103-2) ein weiteres Unterteil (105-2) und ein weiteres Oberteil (107-2) aufweist, wobei das weitere Unterteil (105-2) und das weitere Oberteil (107-2) miteinander verschwenkbar verbunden sind, wobei das weitere Dokument auf das weitere Unterteil (105-2) auflegbar ist und durch das verschwenkbare weitere Oberteil (107-2) gegen das weitere Unterteil (105-2) anpressbar ist; wobei
die Dokumentenaufnahme (103-1) und die weitere Dokumentenaufnahme (103-2) an der stabförmigen Führung (109) ortsfest zueinander und gemeinsam verschwenkbar angeordnet sind und eine Doppelaufnahme für die Aufnahme des Dokumentes (101) und des weiteren Dokumentes (102) an der Dokumentenaufnahmestelle (113) bilden; wobei
die stabförmige Führung (109) ausgebildet ist, die Dokumentenaufnahme (103-1) und die weitere Dokumentenaufnahme (103-2) von der Dokumentenaufnahmestelle (113) zu der Laminierstelle (115) gemeinsam verschwenkt in der zweiten Lage (133) zu befördern.

6. Laminiersystem (100) nach Anspruch 5, wobei die Dokumentenaufnahme (103-1) ausgebildet ist, das Dokument (101) in einem ersten Dokumentenformat aufzunehmen, und wobei die weitere Dokumentenaufnahme (103-2) ausgebildet ist, das weitere Dokument (101) in einem weiteren Dokumentenformat aufzunehmen, wobei das Dokumentenformat und das weitere Dokumentenformat unterschiedlich sind.

7. Laminiersystem (100) nach Anspruch 5 oder 6, wobei die Dokumentenaufnahme (103-1) und die weitere Dokumentenaufnahme (103-2) unabhängig voneinander um die Längsachse (111) der stabförmigen Führung (109) rotierbar gelagert sind.

8. Laminiersystem (100) nach einem der vorstehenden Ansprüche, wobei die jeweilige Dokumentenaufnahme (103-1, 103-2) an einer Hülse (117) befestigt ist, insbesondere mit der Hülse (117) stoffschlüssig verbunden ist, wobei die Hülse (117) durch die stabförmige Führung (109) durchsetzt und um die Längsachse (111) durchsetzbar ist.

9. Laminiersystem (100) nach einem der vorstehenden Ansprüche, wobei die stabförmige Führung (109) ein Gewinde, insbesondere ein Außengewinde, aufweist und um die Längsachse (111) rotierbar gelagert ist, und wobei die jeweilige Dokumentenaufnahme (103-1, 103-2) mit der stabförmigen Führung (109) in Gewindeeingriff, insbesondere mittels einer Hülse (117) mit einem Gewinde, verbunden ist.

10. Laminiersystem (100) nach einem der vorstehenden Ansprüche, mit einer Heizeinrichtung (119), welche an der Laminierstelle (115) angeordnet und ausgebildet ist, die jeweilige Dokumentenaufnahme (103-1, 103-2) mit Wärme zu beaufschlagen, um das jeweilige Dokument (101) zu laminieren.

11. Laminiersystem (100) nach einem der vorstehenden Ansprüche, mit einer Anpresseinrichtung (121), welche an einer Anpressstelle (123) nach der Laminierstelle (115) angeordnet ist, wobei die stabförmige Führung (109) ausgebildet ist, die Dokumentenaufnahme (103-1) verschwenkt, insbesondere um 90° verschwenkt, zu der Anpressstelle (123) zu befördern, wobei die Anpresseinrichtung (121) ausgebildet ist, das jeweilige Unterteil (105-1, 105-2) gegen das jeweilige Oberteil (107-1, 107-2) anzupressen, und wobei die stabförmige Führung (109) ausgebildet ist, die Dokumentenaufnahme (103-1) von der Laminierstelle (115) zu der Anpressstelle (123) verschwenkt zu befördern.

12. Laminiersystem (100) nach einem der vorstehenden Ansprüche, mit einer Kühleinrichtung (125), welche an einer Kühlstelle (127) nach der Laminierstelle (115) angeordnet ist, wobei die Kühleinrichtung (125) ausgebildet ist, die Dokumentenaufnahme (103-1) abzukühlen, um das laminierte Dokument (101) zu verfestigen, und mit einer Dokumentenentnahmestelle (129), welche der Kühlstelle (127) nachgeschaltet ist, wobei an der Dokumentenentnahmestelle (129) das abgekühlte, laminierte Dokument (101) entnehmbar ist.

13. Laminiersystem (100) nach Anspruch 12, wobei die stabförmige Führung (109) ausgebildet ist, die Dokumentenaufnahme (103-1) sequenziell von der Dokumentenaufnahmestelle (113), zu der Laminierstelle (115), zu der Kühlstelle (127), zu der Dokumentenentnahmestelle (129) und zurück zu der Dokumentenaufnahmestelle (113) zu bewegen.

14. Laminiersystem (100) nach Anspruch 12 oder 13, mit drei weiteren Dokumentenaufnahmen (205-1, 205-2, 205-3) und drei weiteren stabförmigen Führungen (207-1, 207-2, 207-3), welche jeweils parallel zu der stabförmigen Führung (109) angeordnet sind, wobei jeweils nur eine Dokumentenaufnahme der vier Dokumentenaufnahmen (103-1, 205-1, 205-2, 205-3) an der Dokumentenaufnahmestelle (113), der Laminierstelle (115), der Kühlstelle (127) oder der Dokumentenentnahmestelle (129) mittels der jeweiligen stabförmigen Führung (109, 207-1, 207-2, 207-3) angeordnet ist, um kontinuierlich der jeweiligen nächsten Stelle ein Dokument (101) aus der vorgeschalteten Stelle bereitzustellen.

15. Laminiersystem (100) nach Anspruch 14, wobei die vier stabförmigen Führungen (109, 207-1, 207-2, 207-3) paarweise gegenüberliegend angeordnet sind, und wobei die Dokumentenaufnahmestelle (113), die Laminierstelle (115), die Kühlstelle (127) und die Dokumentenentnahmestelle (129) in einer Reihe parallel zu den stabförmigen Führungen (109, 207-1, 207-2, 207-3) zwischen den zwei Paaren von stabförmigen Führungen (109, 207-1, 207-2, 207-3) angeordnet sind.

## Claims

1. A laminating system (100) for laminating documents (101), comprising:
a document receptacle (103-1) with a lower part (105-1) and an upper part (107-1), wherein the lower part (105-1) and the upper part (107-1) are pivotably connected to one another, and wherein at least one document (101) can be placed on the lower part (105-1) and can be pressed against the lower part (105-1) by the pivotable upper part (107-1);
a rod-shaped guide (109) for conveying the document receptacle (103-1) along a longitudinal axis (111) of the rod-shaped guide (109) from a document receiving point (113) to a laminating point (115), wherein the document receptacle (103-1) is pivotally mounted at the rod-shaped guide (109) about the longitudinal axis (111) of the rod-shaped guide (109);
wherein the document receptacle (103-1) is configured at the document receiving point (113) to receive the document (101) and to press the upper part (107-1) against the lower part (105-1) in order to fix the document (101);
wherein the rod-shaped guide (109) is configured to convey the document receptacle (103-1) from the document receiving point (113) to the laminating point (115) after receiving the at least one document (101);
wherein the document receptacle (103-1) can be heated at the laminating point (115) in order to laminate the document (101).

2. The laminating system (100) according to claim 1, wherein the document receptacle (103-1) for receiving the at least one document (101) is pivotable or positionable in a first position (131), in particular in a horizontal position, and wherein the document receptacle (103-1) can be pivoted into a second position (133), in particular into a position perpendicular to the first position (131), for transport to the laminating point (115).

3. The laminating system (100) according to claim 2, wherein the rod-shaped guide (109) is configured to convey the document receptable (103-1) in the second position (133) to the laminating point (115).

4. The laminating system (100) according to one of the preceding claims, wherein the lower part (105-1) has a receiving trough (301) for receiving a document (101) or juxtaposed receiving troughs (303-1, 303-2) for receiving at least two documents (101).

5. The laminating system (100) according to one of the preceding claims, comprising a further document receptacle (103-2) for receiving a further document (102), wherein the further document receptacle (103-2) comprises a further lower part (105-2) and a further upper part (107-2), wherein the further lower part (105-2) and the further upper part (107-2) are pivotally connected to one another, wherein the further document can be placed on the further lower part (105-2) and can be pressed by means of the pivotable further upper part (107-2) against the further lower part (105-2); wherein
the document receptacle (103-1) and the further document receptacle (103-2) are arranged on the rod-shaped guide (109) in a fixed position relative to one another and can be pivoted together, and form a double receptacle for receiving the document (101) and the further document (102) at the document receiving point (113); wherein
the rod-shaped guide (109) is configured to convey the document receptacle (103-1) and the further document receptacle (103-2), which are jointly pivoted at the second position (133), from the document receptacle point (113) to the laminating point (115).

6. The laminating system (100) according to claim 5, wherein the document receptacle (103-1) is configured to receive the document (101) in a first document format, and wherein the further document receptable (103-2) is configured to receive the further document (101 ) in a further document format, wherein the document format and the further document format are different.

7. The laminating system (100) according to claim 5 or 6, wherein the document receptacle (103-1) and the further document receptacle (103-2) are rotatably mounted independently of one another about the longitudinal axis (111) of the rod-shaped guide (109).

8. The lamination system (100) according to any one of the preceding claims, wherein the respective document receptacle (103-1, 103-2) is attached to a sleeve (117), in particular integrally connected with the sleeve (117), wherein the sleeve (117) is passed through the rod-shaped guide (109) and can be passed through about the longitudinal axis (111).

9. The laminating system (100) according to any one of the preceding claims, wherein the rod-shaped guide (109) comprises a thread, in particular an external thread, and is rotatably mounted about the longitudinal axis (111), and wherein the respective document receptacle (103-1, 103- 2) is connected with the rod-shaped guide (109) in threaded engagement, in particular by means of a sleeve (117) with a thread.

10. The laminating system (100) according to one of the preceding claims, comprising a heating device (119) which is arranged at the laminating point (115) and is configured to apply heat to the respective document receptacle (103-1, 103-2) in order to laminate the respective document (101).

11. The laminating system (100) according to one of the preceding claims, comprising a pressing device (121) which is arranged at a pressing point (123) after the laminating point (115), wherein the rod-shaped guide (109) is configured to convey the document receptacle (103- 1) pivoted, in particular pivoted through 90°, to the pressing point (123), wherein the pressing device (121) is configured to press the respective lower part (105-1, 105-2) against the respective upper part (107-1, 107 -2), and wherein the rod-shaped guide (109) is configured to convey the document receptacle (103-1) pivoted from the laminating point (115) to the pressing point (123).

12. The laminating system (100) according to one of the preceding claims, comprising a cooling device (125) which is arranged at a cooling point (127) after the laminating point (115), wherein the cooling device (125) is configured to cool down the document receptacle (103-1) in order to solidify the laminated document (101); and comprising a document removal point (129) which is connected downstream of the cooling point (127), wherein the cooled, laminated document (101) can be removed at the document removal point (129).

13. The lamination system (100) according to claim 12, wherein the rod-shaped guide (109) is configured to sequentially move the document receptacle (103-1) from the document receiving point (113), to the laminating point (115), to the cooling point (127), to the document removal point (129) and back to the document receiving point (113).

14. The laminating system (100) according to claim 12 or 13, comprising three further document receptacles (205-1, 205-2, 205-3) and three further rod-shaped guides (207-1, 207-2, 207-3), each of which are arranged parallel to the rod-shaped guide (109), wherein only one document receptacle of each of the four document receptacles (103-1, 205-1, 205-2, 205-3) is arranged at the document receiving point (113), the laminating point (115), the cooling point (127) or the document removal point (129) by means of the respective rod-shaped guide (109, 207-1, 207-2, 207-3) in order to continuously provide the respective next point with a document (101) from the upstream point.

15. The laminating system (100) according to claim 14, wherein the four rod-shaped guides (109, 207-1, 207-2, 207-3) are arranged in pairs opposite one another, and wherein the document receiving point (113), the laminating point (115), the cooling point (127) and the document removal point (129) are arranged in a row parallel to the rod-shaped guides (109, 207-1, 207-2, 207-3) between the two pairs of rod-shaped guides (109, 207-1, 207-2 , 207-3).

## Revendications

1. Système de lamination (100) pour la lamination de documents (101), comprenant :
un logement de documents (103-1) doté d'une partie inférieure (105-1) et d'une partie supérieure (107- 1), dans lequel la partie inférieure (105-1) et la partie supérieure (107-1) sont reliées l'une à l'autre de manière pivotante, et dans lequel au moins un document (101) peut être posé sur la partie inférieure (105-1) et peut être pressé contre la partie inférieure (105-1) au moyen de la partie supérieure pivotante (107-1) ;
un guide (109) en forme de barre pour le transport du logement de documents (103-1) le long d'un axe longitudinal (111) du guide (109) en forme de barre d'un emplacement de réception de documents (113) à un emplacement de lamination (115), dans lequel le logement de documents (103-1) est monté sur le guide (109) en forme de barre de manière pivotante autour de l'axe longitudinal (111) du guide (109) en forme de barre ; dans lequel
le logement de documents (103-1) est conçu pour recevoir le document (101) à l'emplacement de réception de documents (113) et pour presser la partie supérieure (107-1) contre la partie inférieure (105-1), afin de fixer le document (101) ; dans lequel
le guide (109) en forme de barre est conçu pour transporter le logement de documents (103-1) de l'emplacement de réception de documents (113) à l'emplacement de lamination (115) après la réception de l'au moins un document (101) ; dans lequel le logement de documents (103-1) peut être chauffé à l'emplacement de lamination (115), afin de laminer le document (101).

2. Système de lamination (100) selon la revendication 1, dans lequel le logement de documents (103-1) peut être pivoté ou peut être positionné dans une première position (131), en particulier dans une position horizontale, pour la réception de l'au moins un document (101), et dans lequel le logement de documents (103-1) peut être pivoté dans une deuxième position (133), en particulier dans une position perpendiculaire à la première position (131), pour le transport jusqu'à l'emplacement de lamination (115) .

3. Système de lamination (100) selon la revendication 2, dans lequel le guide (109) en forme de barre est conçu pour transporter le logement de documents (103-1) dans la deuxième position (133) jusqu'à l'emplacement de lamination (115).

4. Système de lamination (100) selon l'une des revendications précédentes, dans lequel la partie inférieure (105-1) comprend une cavité de réception (301) pour la réception d'un document (101) ou des cavités de réception juxtaposées (303-1, 303-2) pour la réception d'au moins deux documents (101).

5. Système de lamination (100) selon l'une des revendications précédentes, comprenant un autre logement de documents (103-2) pour la réception d'un autre document (102), dans lequel l'autre logement de documents (103-2) comprend une autre partie inférieure (105-2) et une autre partie supérieure (107-2), dans lequel l'autre partie inférieure (105-2) et l'autre partie supérieure (107-2) sont reliées l'une à l'autre de manière pivotante, dans lequel l'autre document peut être posé sur l'autre partie inférieure (105-2) et peut être pressé contre l'autre partie inférieure (105-2) au moyen de l'autre partie supérieure pivotante (107-2) ; dans lequel le logement de documents (103-1) et l'autre logement de documents (103-2) sont disposés sur le guide (109) en forme de barre de manière fixe l'un par rapport à l'autre et de manière à pouvoir pivoter conjointement et forment un logement double pour la réception du document (101) et de l'autre document (102) à l'emplacement de réception de documents (113) ; dans lequel
le guide (109) en forme de barre est conçu pour transporter le logement de documents (103-1) et l'autre logement de documents (103-2) de l'emplacement de réception de documents (113) à l'emplacement de lamination (115) de manière pivotée conjointement dans la deuxième position (133).

6. Système de lamination (100) selon la revendication 5, dans lequel le logement de documents (103-1) est conçu pour recevoir le document (101) dans un premier format de document, et dans lequel l'autre logement de documents (103-2) est conçu pour recevoir l'autre document (101) dans un autre format de document, dans lequel le format de document et l'autre format de document sont différents.

7. Système de lamination (100) selon la revendication 5 ou 6, dans lequel le logement de documents (103-1) et l'autre logement de documents (103-2) sont montés de manière à pouvoir tourner indépendamment l'un de l'autre autour de l'axe longitudinal (111) du guide (109) en forme de barre.

8. Système de lamination (100) selon l'une des revendications précédentes, dans lequel le logement de documents respectif (103-1, 103-2) est fixé à une douille (117), en particulier est relié par liaison de matière à la douille (117), dans lequel la douille (117) est traversée par le guide (109) en forme de barre et peut être traversée autour de l'axe longitudinal (111).

9. Système de lamination (100) selon l'une des revendications précédentes, dans lequel le guide (109) en forme de barre comprend un filetage, en particulier un filetage extérieur et est monté de manière à pouvoir tourner autour de l'axe longitudinal (111), et dans lequel le logement de documents respectif (103-1, 103-2) est relié au guide (109) en forme de barre en prise par filetage, en particulier au moyen d'une douille (117) dotée d'un filetage.

10. Système de lamination (100) selon l'une des revendications précédentes, comprenant un dispositif de chauffage (119), lequel est disposé à l'emplacement de lamination (115) et est conçu pour exposer le logement de documents respectif (103-1, 103-2) à de la chaleur, afin de laminer le document respectif (101).

11. Système de lamination (100) selon l'une des revendications précédentes, comprenant un dispositif de pressage (121), lequel est disposé à un emplacement de pressage (123) après l'emplacement de lamination (115), dans lequel le guide (109) en forme de barre est conçu pour transporter le logement de documents (103-1) de manière pivotée, en particulier de manière pivotée de 90°, jusqu'à l'emplacement de pressage (123), dans lequel le dispositif de pressage (121) est conçu pour presser la partie inférieure respective (105-1, 105-2) contre la partie supérieure respective (107-1, 107-2), et dans lequel le guide (109) en forme de barre est conçu pour transporter le logement de documents (103-1) de l'emplacement de lamination (115) à l'emplacement de pressage (123).

12. Système de lamination (100) selon l'une des revendications précédentes, comprenant un dispositif de refroidissement (125), lequel est disposé à un emplacement de refroidissement (127) après l'emplacement de lamination (115), dans lequel le dispositif de refroidissement (125) est conçu pour refroidir le logement de documents (103-1), afin de solidifier le document laminé (101), et comprenant un emplacement de prélèvement de documents (129), lequel est placé en aval de l'emplacement de refroidissement (127), dans lequel le document laminé refroidi (101) peut être prélevé à l'emplacement de prélèvement de documents (129).

13. Système de lamination (100) selon la revendication 12, dans lequel le guide (109) en forme de barre est conçu pour déplacer séquentiellement le logement de documents (103-1) de l'emplacement de réception de documents (113), à l'emplacement de lamination (115), à l'emplacement de refroidissement (127), à l'emplacement de prélèvement de documents (129) et de retour à l'emplacement de réception de documents (113).

14. Système de lamination (100) selon la revendication 12 ou 13, comprenant trois autres logements de documents (205-1, 205-2, 205-3) et trois autres guides (207-1, 207-2, 207-3) en forme de barres, lesquels sont disposés respectivement parallèlement au guide (109) en forme de barre, dans lequel respectivement seulement un logement de documents des quatre logements de documents (103-1, 205-1, 205-2, 205-3) est disposé à l'emplacement de réception de documents (113), l'emplacement de lamination (115), l'emplacement de refroidissement (127) ou l'emplacement de prélèvement de documents (129) au moyen du guide (109, 207-1, 207-2, 207-3) en forme de barre respectif, afin de fournir de manière continue, à l'emplacement suivant respectif, un document (101) provenant de l'emplacement situé en amont.

15. Système de lamination (100) selon la revendication 14, dans lequel les quatre guides (109, 207-1, 207-2, 207-3) en forme de barres sont disposés en regard par paires, et dans lequel l'emplacement de réception de documents (113), l'emplacement de lamination (115), l'emplacement de refroidissement (127) et l'emplacement de prélèvement de documents (129) sont disposés en une rangée parallèlement aux guides (109, 207-1, 207-2, 207-3) en forme de barres entre deux paires de guides (109, 207-1, 207-2, 207-3) en forme de barres.
